(19) **Europäisches Patentamt / European Patent Office / Office européen des brevets**

(11) **EP 1 434 443 B1**

(12) **EUROPEAN PATENT SPECIFICATION**

(45) Date of publication and mention
of the grant of the patent:
**19.11.2008 Bulletin 2008/47**

(51) Int Cl.:
**H04N 7/46** (2006.01)   **H04N 5/262** (2006.01)
**H04N 7/26** (2006.01)

(21) Application number: **03090455.1**

(22) Date of filing: **23.12.2003**

(54) **Video encoding for low bitrates**

Videokodierung für niedrige Bitraten

Codage vidéo à faible débit

(84) Designated Contracting States:
**DE FR GB IT**

(30) Priority: **26.12.2002   JP 2002376563**

(43) Date of publication of application:
**30.06.2004   Bulletin 2004/27**

(73) Proprietor: **NEC CORPORATION**
**Tokyo (JP)**

(72) Inventor: **Yoneda, Michiko**
**c/o NEC Corporation**
**Tokyo (JP)**

(74) Representative: **Wenzel & Kalkoff**
**Grubes Allee 26**
**22143 Hamburg (DE)**

(56) References cited:
**EP-A- 0 291 347          DE-A- 4 311 479**
**US-A- 4 214 263          US-A- 5 253 065**
**US-A- 5 469 212          US-A- 5 742 707**

• **PATENT ABSTRACTS OF JAPAN vol. 1998, no. 09, 31 July 1998 (1998-07-31) & JP 10 112852 A (NIPPON TELEGR &TELEPH CORP <NTT>), 28 April 1998 (1998-04-28)**

Printed by Jouve, 75001 PARIS (FR)

**Description**

BACKGROUND OF THE INVENTION

FIELD OF THE INVENTION

The invention relates to an apparatus for encoding dynamic images, applicable to a television-telephone and a cellular phone with a camera in recording dynamic images thereinto, and further to a method of doing the same.

DESCRIPTION OF THE RELATED ART

In an apparatus for encoding dynamic images at a low bit-rate, applicable to a television-telephone and a cellular phone with a camera in recording dynamic images thereinto, various encoding-controls are carried out to control the amount of produced codes into a predetermined bit-rate range. Control for an amount of produced codes is grouped into a control carried out by adjusting a quantized step size and a control carried out by frame-skipping.

In the first control, the amount of produced codes is reduced in each frame by enlarging a quantized step size and thus enhancing the compression ratio. Consequently, the first control is problematic in that the image quality in each frame is degraded. In the latter control, the amount of produced codes is reduced not by enhancing a compression ratio in each frame, but by reducing the number of frames to be encoded. Consequently the image quality in each frame is not degraded, but the motion defined by frames is not smooth.

The image quality in each Erame and smoothness of motion are in a trade-off relation to each other, and hence, a combination of the first and latter controls is usually used to control he amount of produced codes.

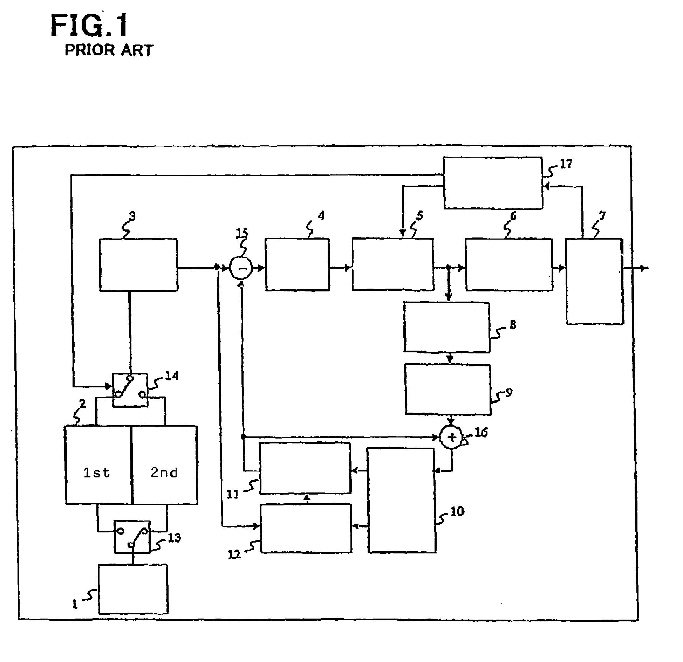

FIG. 1 is a block diagram of a conventional apparatus for encoding dynamic images by carrying out the above-mentioned control for reducing the amount of produced codes.

The illustrated apparatus comprises an input section 1 through which dynamic images are input into the apparatus, a frame memory 2, a blocking section 3, a discrete cosine transformer 4, a quantizer 5, a code converter 6, a buffer 7, an inverse-quantizer 8, an inverse discrete cosine transformer 9, a reference frame memory 10, an estimated-image producer 11, a motion detector 12, a first switch 13, a second switch 14, a subtracter 15, an adder 16, and a controller 17 for controlling an amount of produced codes.

The input section 1 includes a camera such as a CMOS camera or a CCD camera, and receives successive frames through the camera. The thus received frames are transmitted into the frame memory 2 through the first switch 13, and stored in the frame memory 2. The frame memory 2 is designed to have first and second memories in one of which frames transmitted from the input section 1 are stored and in the other of which frames to which the blocking section 3 makes access are stored. The first and second memories are switched in toggle by the first and second switches 13 and 14. Specifically, when the second memory is connected to the input section 1 through the first switch 13, the first memory is connected to the blocking section 3 through the second switch 14.

The following explains the operation of the apparatus.

The blocking section 3 divides frame data stored in the frame memory 2, into m×n blocks wherein "m" and "n" are integers, and outputs image data (blocked data) in each of blocks. Frame data is encoded in each of blocks.

Image data output from the blocking section 3 are transmitted to the subtracter 15 and the motion detector 12.

The motion detector 12 is connected to the reference frame memory 10 storing therein the temporally previous frame, that is, a reference frame. The motion detector 12 detects motion between the reference data and the block data transmitted from the blocking section 3, and calculates the vector of motion.

The thus calculated motion vector is transmitted to the estimated-image producer 11. The estimated-image producer 11 produces estimated images, based on the motion vector and the reference frame received from the reference frame memory 10. The estimated-image producer 11 transmits the thus produced estimated image to the subtracter 15 and the adder 16.

The subtracter 15 calculates a difference in block data between the block data received from the blocking section 3 and the estimated images received from the estimated-image producer 11, and transmits the thus calculated block data difference to the discrete cosine transformer 4.

The discrete cosine transformer 4 applies discrete cosine transformation (DCT) to the differential block data to thereby calculate a DCT coefficient. The discrete cosine transformer 4 outputs the thus calculated DCT coefficient to the quantizer 5. The quantizer 5 quantizes the received DCT coefficient. The quantizer 5 outputs the thus quantized DCT coefficient to the code converter 6 and the inverse-quantizer 8.

The inverse-quantizer 8 inversely quantizes the quantized data. The inverse discrete cosine transformer 9 applies inverse discrete cosine transformation (IDCT) to the thus inversely quantized data, and transmits the inversely quantized data to the adder 16. The adder 16 receives the inversely quantized data from the inverse discrete cosine transformer 9, and the estimated images from the estimated-image producer 11. The adder 16 adds the inversely quantized data and the estimated images to each other to reproduce reference frame data. The thus reproduced reference frame data is transmitted to the reference frame memory 10, and is stored in the reference frame memory 10. The reference frame data is used as a reference frame for the next frame.

The code converter 6 applies variable-length encoding to the quantized DCT coefficient transmitted from the quantizer 5, and transmits the thus encoded data to the buffer 7. The encoded data is periodically transmitted to a channel from the buffer 7 at a rate of 64 kbps, for instance.

The controller 17 monitors occupation of the encoded data in the buffer 7, and controls the quantizer 5 and the second switch 14. For instance, the controller 17 in advance determines a first threshold for varying a step for quantization and a second threshold for skipping frames, wherein the first threshold is smaller than the second threshold. If the occupation of the encoded data is over the first threshold, the controller 17 transmits a control signal to the quantizer to enlarge the size of the quantization step for reducing an amount of codes.

If codes are produced in excess and thus, even the above-mentioned control cannot suppress an increase in codes, and hence, if the occupation of the encoded data is over the second threshold, the controller 17 transmits a frame-skip signal to the second switch 14. On receipt of the frame-skip signal from the controller 17, the second switch 14 is turned off, i.e. it is not connected to the frame memory 2. Accordingly, frame data stored in the frame memory 2 is not introduced into the blocking section 3, and hence, is not encoded. As a result, there occurs frame-skipping, causing discontinuity in motion.

Japanese Patent Application Publication No. 10-112852 has suggested an apparatus and a method in which a plurality of frames is selected according to the amount of motion in images, the frames are made to overlap one another to form one still image, the still image is displayed under the after-image effect, and the still image is encoded. Thus, it is possible to prevent image data from being omitted, even if not all image data are received.

In the above-mentioned prior art, if an amount of codes is significantly increased because of acute motion of a target, for instance, and thus, frames are skipped, discontinuity in motion is conspicuous to a viewer.

If, however, the amount of codes is controlled only by adjustment of a size of quantization step in order to prevent occurrence of frame-skipping, it would be unavoidable that image quality in each frame degrades.

## SUMMARY OF THE INVENTION

In view of the above-mentioned problems in prior art, it is an object of the invention to provide an apparatus and a method for encoding dynamic images both of which are capable of ensuring smooth motion without degradation in image quality in frames, even if there occurs frame-skipping.

In one aspect of the invention, there is provided an apparatus according to claim 1. effect, in place of the frame to be encoded.

In another aspect of the invention, there is provided a method according to claim 6.

In still another aspect of the invention, there is provided a program according to claim 9.

The advantages obtained by the invention will be described hereinbelow.

In the invention, frames not to be encoded are combined to a frame to be encoded, temporally successive to the frame to be encoded, for forming a frame having after-image effect. The thus formed frame having after-image effect is encoded in place of the frame to be encoded. Thus, even if a frame or frames is(are) skipped, it would be possible to relax discontinuity of motion by virtue of the after-image effect.

## BRIEF DESCRIPTION OF THE DRAWINGS

FIG. 1 is a block diagram of a conventional apparatus for encoding dynamic images.

FIG. 2 is a block diagram of an apparatus for encoding dynamic images, in accordance with the first embodiment of the invention.

FIG. 3 is a block diagram of the frame-producer which is a part of the apparatus illustrated in FIG. 2.

FIG. 4 shows steps to be carried out in the frame-producer illustrated in FIG. 3.

FIG. 5 shows steps to be carried out in the frame-producer illustrated in FIG. 3.

FIG. 6 is a block diagram of a frame-producer which is a part of an apparatus for encoding dynamic images, in accordance with the second embodiment.

FIG. 7 shows steps to be carried out in the frame-producer illustrated in FIG. 6.

FIG. 8A illustrates originally input frames.

FIG. 8B illustrates frames encoded by the conventional apparatus.

FIG. 8C illustrates frames encoded by the apparatus in accordance with the first embodiment.

## DESCRIPTION OF THE PREFERRED EMBODIMENTS

[First Embodiment]

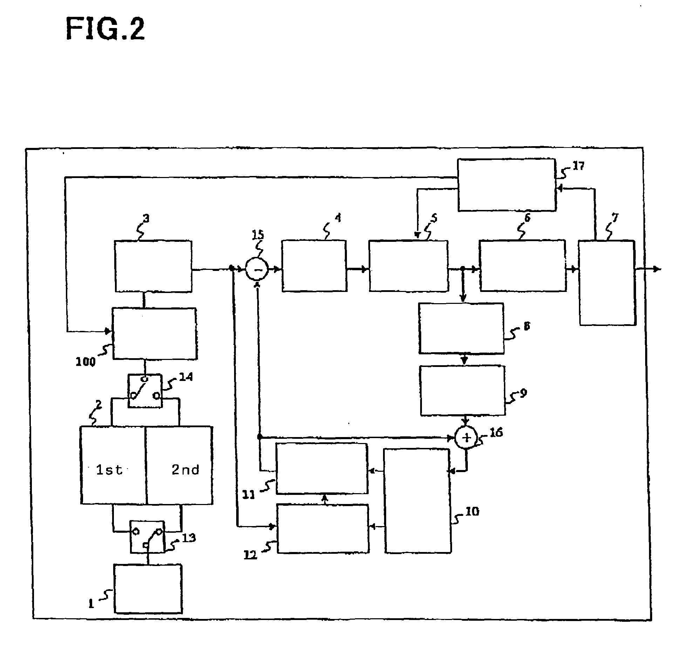

The apparatus of FIG. 2 is structurally different from the conventional apparatus illustrated in FIG. 1 in further including a frame-producer 100 for producing a frame having after-image effect, and further in that the controller 17 is electrically connected not to the second switch 14, but to the frame-producer 100. Parts or elements that correspond to those of the conventional apparatus illustrated in FIG. 1 have been provided with the same reference numerals, and operate in the same manner unless explicitly explained hereinbelow.

In FIG. 2, the second switch 14 for selecting one of the first and second memories constituting the frame memory 2 is electrically connected to the frame-producer 100.

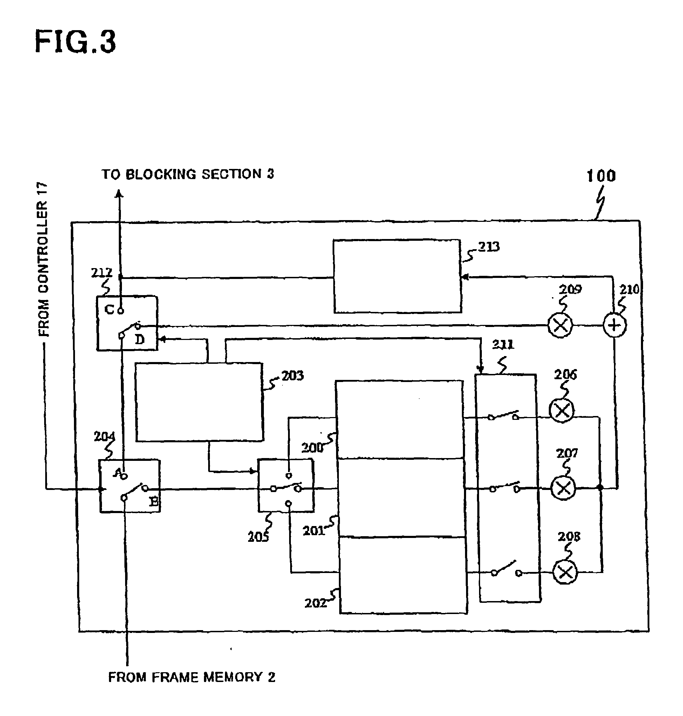

In Fig.3, the frame-producer 100 comprises a first switch 204, a second switch 205, a third switch 211, a fourth switch 212, a first frame memory 200, a second frame memory 201, a third frame memory 202, a frame memory administrator 203, a first multiplier 206 associated with the first frame memory 200, a second multiplier 207 associated with the second frame memory 201, a third multiplier 208 associated with the third frame memory 202, a fourth multiplier 209, an adder 210, and an after-image frame memory 213 storing therein frames having after-image effect.

The first switch 204 connects the frame memory 2 to the blocking section 3 through the fourth switch 212 and further through a terminal A thereof, and connects the frame memory 2 to one of the first to third frame memories 200 to 202 through the second switch and further through a terminal B thereof.

The first switch 204 is switched between the terminals A and B in accordance with a control signal transmitted from the controller 17 in accordance with a degree of occupation of encoded data in the buffer 7. That is, frame skipping control is made in accordance with the occupation of encoded data in the buffer 7.

The following explains the operation of the frame-producer 100 when the occupation of encoded data in the buffer 7 is equal to or greater than a threshold in accordance with which a frame is skipped, and when the occupation of encoded data in the buffer 7 is smaller than the threshold. The threshold in accordance with which a frame is skipped is in advance determined, similarly to the conventional apparatus.

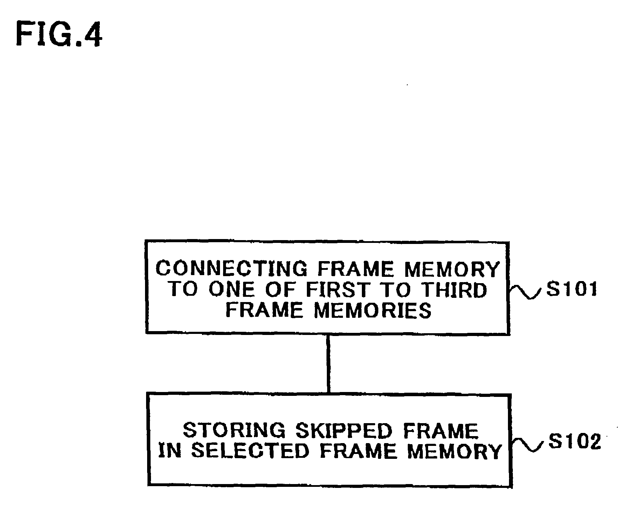

When the occupation of encoded data in the buffer 7 is equal to or greater than the threshold, the frame-producer 100 operates as shown in FIG. 4.

The frame-producer 100 skips a frame input thereinto. The skipped frame is stored in one of the first to third frame memories 200 to 202.

The frame memory 2 is electrically connected to one of the first to third frame memories 200 to 202 through the terminal B of the first switch 204 and further through the second switch 205 (step S101). The third switch 211 is kept off. The second switch 205 selects one of the first to third frame memories 200 to 202 in accordance with a control signal transmitted from the frame memory administrator 203. The skipped frame is stored in the thus selected frame memory (step S102).

The frame memory administrator 203 monitors which frame memory stores skipped frame data therein, and a temporal order in which skipped frame data is stored in a frame memory. Since the frame-producer 100 in the first embodiment is designed to include three frame memories, three skipped frames can be stored in the frame-producer 100. If four or more frames are successively skipped, an older skipped frame stored in one of the first to third frame memories 200 to 202 is rewritten by a newer skipped frame.

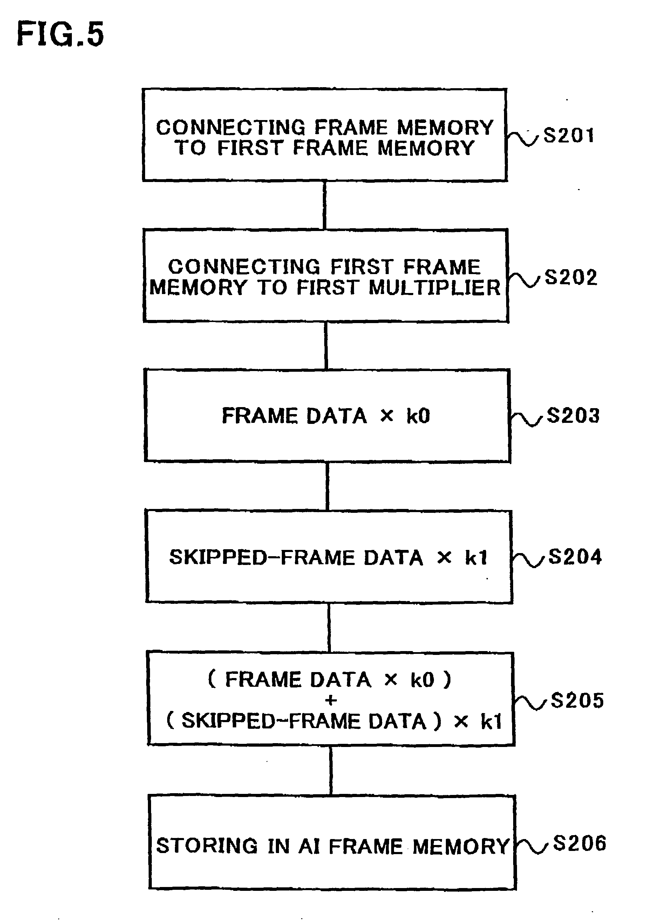

When the occupation of encoded data in the buffer 7 is smaller than the threshold, the frame-producer 100 operates as shown in FIG. 5.

The frame-producer 100 encodes a frame received from the frame memory 2. If another frame has been skipped immediately before receipt of a frame, the frame-producer 100 combines these frames to each other to produce frame data having after-image effect, as follows.

The first switch 204 selects the terminal A. The frame memory administrator 203 stores information as to which frame memory among the first to third frame memories 200 to 202 stores a skipped frame, and switches the third and fourth switches 211 and 212 in accordance with the information.

For instance, when a skipped frame is not stored in any one of the first to third frame memories 200 to 202, the third switch 211 is kept off, and the fourth switch 212 is connected to a terminal C. As a result, frame data having been received from the frame memory 2 is transmitted directly to the blocking section 3 through the first and fourth switches 204 and 212.

If a skipped frame is stored only in the first frame memory 200, the frame memory 2 is electrically connected to the first frame memory 200 through the terminal B of the first switch 204 and further through the second switch 205 (step S201). The third switch 211 electrically connects the first frame memory 200 to the associated first multiplier 206 (step S202), and the fourth switch 212 is connected to a terminal D. A frame received from the frame memory 2 is transmitted to the fourth multiplier 209 through the first and fourth switches 204 and 212, and is multiplied by a coefficient k0 in the fourth multiplier 209 (step S203). A skipped frame stored in the first frame memory 200 is transmitted to the first multiplier 206 through the third switch 211, and is multiplied by a coefficient k1 in the first multiplier 206 (step S204). Then, these frames are transmitted to the adder 210, and added to each other in the adder 210 (step S205). Then, the thus added frames are transmitted to and stored in the after-image frame memory 213 (step S206).

Specifically, frame data to be transmitted to the blocking section 3 to be encoded is calculated as follows.

$$(\text{Input frame data}) \times k0 + (\text{First skipped-frame data}) \times k1$$

Herein, the coefficients k0 and k1 are predetermined constants, wherein k0 is greater than k1 (k0>k1).

If skipped frames are stored in the first and second frame memories 200 and 201, the third switch 211 electrically connects the first frame memory 200 to the associated first multiplier 206, and further electrically connects the second frame memory 201 to the associated second multiplier 207. The fourth switch 212 is connected to a terminal D. A frame received from the frame memory 2 is transmitted to the fourth multiplier 209 through the first and fourth switches 204 and 212, and is multiplied by a coefficient k2 in the fourth multiplier 209. A skipped frame stored in the first frame memory 200 is transmitted to the first multiplier 206 through the third switch 211, and is multiplied by a coefficient k3 in the first multiplier 206. Similarly, a skipped frame stored in the second frame memory 201 is transmitted to the second multiplier 207 through the third switch 211, and is multiplied by a coefficient k4 in the second multiplier 207. Then, these frames are transmitted to the adder 210, and added to each other in the adder 210. Then, the thus added frames are transmitted to and stored in the after-image frame memory 213.

Specifically, frame data to be transmitted to the blocking section 3 to be encoded is calculated as follows.

$$(\text{Input frame data}) \times k2 + (\text{First skipped-frame data}) \times k3 + (\text{Second skipped-frame data}) \times k4$$

Herein, the coefficients k2, k3 and k4 are predetermined constants, wherein k2 is greater than k3, which is greater than k4 (k2>k3>k4).

If skipped frames are stored in the first to third frame memories 200 to 202, the third switch 211 electrically connects the first to third frame memories 200 to 202 to the associated first to third multipliers 206 to 208, respectively. The fourth switch 212 is connected to a terminal D. A frame received from the frame memory 2 is transmitted to the fourth multiplier 209 through the first and fourth switches 204 and 212, and is multiplied by a coefficient k5 in the fourth multiplier 209. A skipped frame stored in the first frame memory 200 is transmitted to the first multiplier 206 through the third switch 211, and is multiplied by a coefficient k6 in the first multiplier 206. Similarly, a skipped frame stored in the second frame memory 201 is transmitted to the second multiplier 207 through the third switch 211, and is multiplied by a coefficient k7 in the second multiplier 207, and a skipped frame stored in the third frame memory 202 is transmitted to the third multiplier 208 through the third switch 211, and is multiplied by a coefficient k8 in the third multiplier 208. Then, these frames are transmitted to the adder 210, and added to one another in the adder 210. Then, the thus added frames are transmitted to and stored in the after-image frame memory 213.

Specifically, frame data to be transmitted to the blocking section 3 to be encoded is calculated as follows.

$$(\text{Input frame data}) \times k5 + (\text{First skipped-frame data}) \times k6 + (\text{Second skipped-frame data}) \times k7 + (\text{Third skipped-frame data}) \times k8$$

Herein, the coefficients k5, k6, k7 and k8 are predetermined constants, wherein k5 is greater than k6, which is greater than k7, which is greater than k8 (k5 > k6>k7>k8).

Hereinafter, frame data having been input to the blocking section 3 is encoded in the same way as the conventional method. After frame data has been transmitted to the blocking section 3, information relating to skipped frames stored in the first to third frame memories 200 to 202, stored in the frame memory administrator 203, is reset to an initial condition. As a result, the frame memory administrator 203 stores no information as to which frame memory stores a skipped frame therein.

In the apparatus in accordance with the first embodiment, frames not to be encoded are combined to a temporally subsequent frame to be encoded, for forming a frame having after-image effect. The thus formed frame having after-image effect is encoded in place of the frame to be encoded. Thus, even if a frame or frames is(are) skipped, it would be possible to relax discontinuity of motion by virtue of the after-image effect.

[Second Embodiment]

An apparatus for encoding dynamic images, in accordance with the second embodiment is structurally different from the apparatus in accordance with the first embodiment only in the frame-producer's structure.

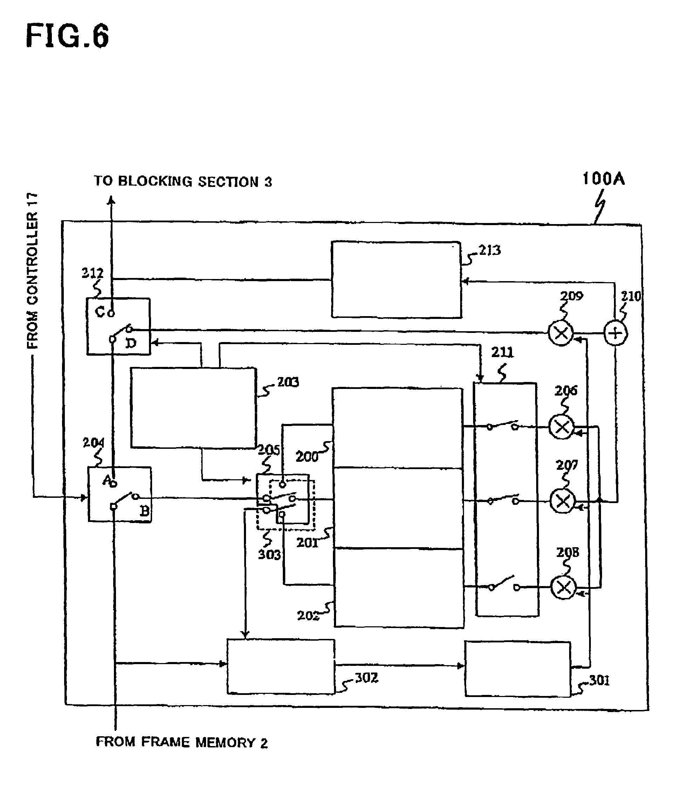

FIG. 6 is a block diagram of a frame-producer 100A in the second embodiment, which is structurally different from the frame-producer 100 in the first embodiment in further including a difference calculator 302, a coefficient calculator 301 and a fifth switch 303. Hence, parts or elements that correspond to those of FIG. 3 have been provided with the same reference numerals, and operate in the same manner as corresponding parts or elements in the frame-producer 100, unless explicitly explained hereinbelow.

The difference calculator 302 receives frame data from the frame memory 2 and skipped-frame data from one of the first to third frame memories 200 to 202, and calculates a difference in each of pixels between the frame data and the skipped-frame data. The calculated difference is transmitted to the coefficient calculator 301.

The coefficient calculator 301 calculates a coefficient in accordance with the difference received from the difference calculator 302, and transmits the thus calculated coefficient to each of the first to fourth multipliers 206 to 209.

The third switch 303 electrically connects the difference calculator 302 to one of the first to third frame memories 200 to 202.

The first switch 204 is switched between the terminals A and B in accordance with a control signal transmitted from the controller 17 in accordance with a degree of occupation of encoded data in the buffer 7, similarly to the first embodiment. That is, frame skipping control is made in accordance with the occupation of encoded data in the buffer 7.

Hereinbelow is explained the operation of frame-producer 100A when the occupation of encoded data in the buffer 7 is equal to or greater than a threshold in accordance with which a frame is skipped, and when the occupation of encoded data in the buffer 7 is smaller than the threshold. The threshold in accordance with which frame is skipped is in advance determined, similarly to the conventional apparatus.

When the occupation of encoded data in the buffer 7 is equal to or greater than the threshold, the frame-producer 100A operates as follows.

The frame-producer 100A carries out the same operation as the operation carried out by the apparatus in accordance with the first embodiment when the occupation of encoded data in the buffer 7 is equal to or greater than the threshold.

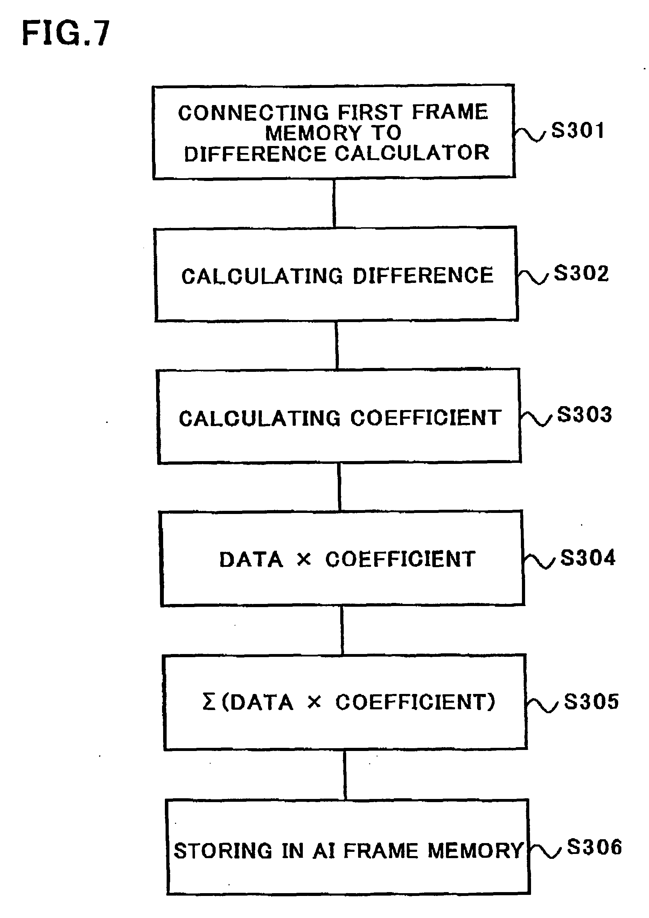

When the occupation of encoded data in the buffer 7 is smaller than the threshold, the frame-producer 100A operates as shown in FIG. 7.

The frame-producer 100A encodes a frame received from the frame memory 2. If another frame has been skipped immediately before receipt of a frame, the frame-producer 100A combines these frames to each other to produce frame data having after-image effect, as follows.

The first switch 204 is connected to the terminal A. The frame memory administrator 203 stores information as to which frame memory among the first to third frame memories 200 to 202 stores a skipped frame, and switches the third and fourth switches 211 and 212 in accordance with the information.

For instance, when a skipped frame is not stored in any one of the first to third frame memories 200 to 202, the third switch 211 is kept off, and the fourth switch 212 is connected to the terminal C. As a result, frame data having been received from the frame memory 2 is transmitted directly to the blocking section 3 through the first and fourth switches 204 and 212.

If a skipped frame is stored only in the first frame memory 200, the fifth switch 303 electrically connects the first frame memory 200 to the difference calculator 302 (step S301). The difference calculator 302 calculates a difference in each of pixels between the frame data received from the frame memory 2 and the skipped-frame data stored in the first frame memory 200 (step S302), and transmits the thus calculated difference to the coefficient calculator 301. The coefficient calculator 301 calculates a coefficient in accordance with the received difference (step S303), and transmits the thus calculated coefficient to each of the first and fourth multipliers 206 and 209.

The coefficient transmitted to the first multiplier 206 is multiplied by the skipped-frame data stored in the first frame memory 200 in each of pixels, and the coefficient transmitted to the fourth multiplier 209 is multiplied by the frame data transmitted from the frame memory 2 in each of pixels (step S304). The frame data and the skipped-frame data each multiplied by the coefficient are added to each other in the adder 210 (step S305). The adder 210 transmits the thus added data to the after-image frame memory 213. The after-image frame memory 213 stores the received data therein as frame data having after-image effect (step S306).

Specifically, frame data to be transmitted to the blocking section 3 to be encoded is calculated as follows.

$$\text{(Input frame data)} \times k0 + \text{(First skipped-frame data)} \times k1$$

Herein, the coefficients k0 and k1 are transmitted from the coefficient calculator 301, wherein k0 is greater than k1 (k0>k1).

If skipped-frame data is stored not only in the first frame memory 200, but also in the second frame memory 201, the first and second frame memories 200 and 201 are electrically connected to the difference calculator 302 in turn through the fifth switch 303, and the same steps as mentioned above are carried out.

If skipped-frame data is stored in the first to third frame memories 200 to 202, the first to third frame memories 200 to 202 are electrically connected to the difference calculator 302 in turn through the fifth switch 303, and the same steps as mentioned above are carried out.

In accordance with the second embodiment, since a coefficient can be defined in accordance with correlation of each of pixels, it would be possible to produce an effective frame having after-image effect.

The frame-producers 100 and 100A in the first and second embodiments are designed to include three frame memories 200 to 202 to store a skipped frame therein. However, it should be noted that the frame-producers 100 and 100A may be designed to include any number of frame memories in accordance with environment in which the apparatus is used.

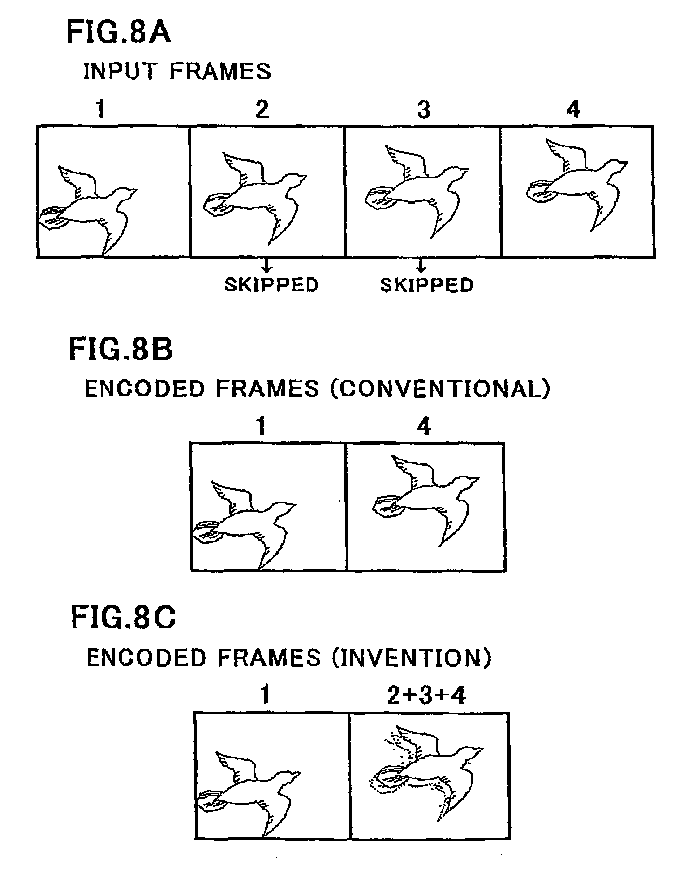

FIGs. 8A to 8C compare the invention and prior art. FIG. 8A illustrates successive four input frames 1 to 4. It is assumed that frames 2 and 3 are skipped.

FIG. 8B illustrates frames encoded in accordance with prior art. As illustrated in FIG. 8B, since frame 4 is located immediately after frame 1, the motion looks discontinuous to a viewer.

FIG. 8C illustrates frames encoded in accordance with the invention. As illustrated in FIG. 8C, a frame following frame 1 comprises frame 4 to which skipped frames 2 and 3 are synthesized, and thus, has after-image effect. Hence, in comparison with the motion in accordance with prior art, defined by frames 1 and 4, visual discontinuity can be relaxed in the motion in accordance with the invention, defined by frame 1 and frame (2 +3+4).

The apparatus for encoding dynamic images has a structure and operates in a manner as mentioned above.

The apparatus may be accomplished by a data processor such as a personal computer or a work station, and a program to carry out the above-mentioned operation. Such program may be presented through a recording medium readable by a computer. The program is read out into a data processor when the data processor starts its operation. By controlling the operation of the data processor, the parts constituting the apparatus, such as the frame memory 2, the blocking section 3, the discrete cosine transformer 4, the quantizer 5, the code transformer 6, the buffer 7, the inverse-quantizer 8, the inverse discrete cosine transformer 9, the reference frame memory 10, the estimated-image producer 11, the motion detector 12, the subtracter 15, the adder 16, the controller 17 and the frame-producer 100, can be accomplished in the data processor. The memories 2, 10, 200 to 202 and 213 can be accomplished by a storage device of the data processor, such as a magnetic disc.

The operation of the above-mentioned apparatus can be accomplished by a computer program written in a language readable by a computer.

For operating the apparatus by means of a computer program, the apparatus may be designed to include a host CPU including a memory to store a computer program therein, for instance. The computer program is stored in the memory, and is read out into the host CPU when the host CPU starts its operation. Thus, such operation of the host CPU is accomplished in accordance with the computer program.

As an alternative, a recording medium storing such computer program as mentioned above may be set into the host CPU to be read out by the host CPU.

The functions of the host CPU may be accomplished as a program including various commands, and be presented through a recording medium readable by a computer.

In the specification, the term "recording medium" means any medium which can record data therein. The term "recording medium" includes, for instance, a disk-shaped recorder such as CD-ROM (Compact Disk-ROM) or PD, a magnetic tape, MO (Magneto Optical Disk), DVD-ROM (Digital Video Disk-Read Only Memory), DVD-RAM (Digital Video Disk-Random Access Memory), a floppy disk, a memory chip such as RAM (Random Access Memory) or ROM (Read Only Memory), EPROM (Erasable Programmable Read Only Memory), EEPROM (Electrically Erasable Programmable Read Only Memory), smart media (Registered Trade Mark), a flush memory, a rewritable card-type ROM such as a compact flush card, a hard disk, and any other suitable means for storing a program therein.

A recording medium storing a program for accomplishing the above-mentioned apparatus may be accomplished by programming functions of the above-mentioned apparatuses with a programming language readable by a computer, and recording the program in a recording medium such as mentioned above.

A hard disc equipped in a server may be employed as a recording medium. It is also possible to accomplish the recording medium by storing the above-mentioned computer program in such a recording medium as mentioned above, and reading the computer program by other computers through a network.

**Claims**

**1.** Apparatus for encoding dynamic images which determines whether an input frame is to be encoded or not in accordance with whether the occupation of data in a buffer (7) is smaller than, equal to or greater than a threshold **characterized by**

(a) a frame-producer (100, 100A) combining a plurality of frames not to be encoded to a frame to be encoded for forming a frame having after-image effect, wherein the frame-producer (100, 100A) multiplies coefficients determined in accordance with a number of the frames not to be encoded, by the frames not to be encoded and the frame to be encoded, and adds the frames not to be encoded and the frame to be encoded to one another, the frames not to be encoded being temporally successive to the frame to be encoded; and
(b) an encoder (3, 4, 5, 6) encoding the frame having after-image effect, in place of the frame to be encoded.

**2.** Apparatus as set forth in claim 1, further comprising:

(c) a memory (200, 201, 202) storing therein a frame not to be encoded; and
(d) an administrator (203) monitoring whether the memory (200, 201, 202) stores therein a frame not to be encoded.

**3.** Apparatus as set forth in claim 1 or 2, wherein the frame-producer (100, 100A) multiplies coefficients determined in accordance with differences in pixels between the frames not to be encoded and the frame to be encoded, by the frames not to be encoded and the frame to be encoded pixel by pixel, and adds the frames not to be encoded and the frames to be encoded to one another.

**4.** Apparatus as set forth in claim 1, wherein the frame-producer (100) includes:

(a) first to N-th memories (200, 201, 202) each storing therein a frame not to be encoded, wherein N is an integer equal to or greater than two;
(b) an administrator (203) monitoring whether each of the first to N-th memories (200, 201, 202) stores therein a frame not to be encoded;
(c) a switch (205) selecting one of the first to N-th memories (200, 201, 202) to store therein a frame not to be encoded, in accordance with instruction received from the administrator (203);
(d) first to N-th multipliers (206, 207, 208) associated with the first to N-th memories (200, 201, 202), respectively, the first to N-th multipliers (206, 207, 208) multiplying a coefficient determined according to the number of frames not to be encoded, by a frame not to be encoded, stored in the first to N-th memories (200,201, 202);
(e) a multiplier (206,207,208) multiplying a coefficient determined according to the number of frames not to be encoded, by a frame to be encoded; and
(f) an adder (210) adding the frame not to be encoded having multiplied by the coefficient, to the frame to be encoded having multiplied by the coefficient, to each other.

**5.** Apparatus as set forth in claim 4, wherein the frame-producer (100A) further includes:

(g) a difference calculator (302) calculating the difference in pixels between the frames not to be encoded and the frame to be encoded; and
(h) a coefficient calculator (301) calculating a coefficient in accordance with the difference calculated by the difference calculator (302), and transmitting the thus calculated coefficient to each of the first to N-th multipliers (206, 207, 208).

**6.** Method of encoding dynamic images, including:

(a) determining whether an input frame is to be encoded or not to be encoded in accordance with whether the occupation of data in a buffer (7) is smaller than, equal to or greater than a threshold;
(b) combining a plurality of frames not to be encoded to a frame to be encoded for forming a frame having after-image effect by
(c) multiplying coefficients determined in accordance with a number of the frames not to be encoded, by the frames not to be encoded and the frame to be encoded; and
(d) adding the frames not to be encoded and the frame to be encoded to one another., the frames not to be encoded being temporally successive to the frame to be encoded; and
(e) encoding the frame having after-image effect, in place of the frame to be encoded.

7. Method as set forth in claim 6, further including:

(f) storing a frame not to be encoded, into a memory; and
(g) monitoring whether the memory stores therein a frame not to be encoded.

8. Method as set forth in claim 6 or 7, further including:

(h) multiplying coefficients determined in accordance with differences in pixels between the frames not to be encoded and the frame to be encoded, by the frames not to be encoded and the frame to be encoded pixel by pixel; and
(i) adding the frames not to be encoded and the frames to be encoded to one another.

9. Program for causing a computer to carry out a method of encoding dynamic images, steps executed by the computer in accordance with the program including:

(a) determining whether an input frame is to be encoded or not to be encoded in accordance with whether the occupation of data in a buffer (7) is smaller than, equal to or greater than a threshold;
(b) a frame-producer combining a plurality of frames not to be encoded to a frame to be encoded for forming a frame having after-image effect by
(c) multiplying coefficients determined according to the number of the frames not to be encoded, by the frames not to be encoded and the frame to be encoded, and
(d) adding the frames not to be encoded and the frame to be encoded to one another, the frames not to be encoded being temporally successive to the frame to be encoded; an
(e) encoding the frame having after-image effect, in place of the frame to be encoded.

10. Program as set forth in claim 9, wherein the steps further include:

(f) storing a frame not to be encoded, into a memory; and
(g) monitoring whether the memory stores therein a frame not to be encoded.

11. Program as set forth in claim 9 or 10, wherein the steps further include:

(h) multiplying coefficients determined in accordance with differences in pixels between the frames not to be encoded and the frame to be encoded, by the frames not to be encoded and the frame to be encoded pixel by pixel; and
(i) adding the frames not to be encoded and the frames to be encoded to one another.


**Patentansprüche**

1. Vorrichtung zum Kodieren dynamischer Bilder, die in Übereinstimmung damit, ob die Datenbelegung in einem Puffer (7) kleiner als, gleich oder größer als ein Schwellwert ist, bestimmt, ob ein Eingaberahmen kodiert werden soll oder nicht
**gekennzeichnet durch**

(a) einen Rahmenerzeuger (100, 100A), der eine Mehrzahl von nicht zu kodierenden Rahmen zu einem zu kodierenden Rahmen zum Bilden eines Rahmens, der einen Nachbildeffekt aufweist, kombiniert, wobei der Rahmenerzeuger (100, 100A) Koeffizienten, die in Übereinstimmung mit einer Anzahl von den nicht zu kodierenden Rahmen bestimmt werden, mit den nicht zu kodierenden Rahmen und dem zu kodierenden Rahmen multipliziert, und die nicht zu kodierenden Rahmen und den zu kodierenden Rahmen zu einander addiert, wobei die nicht zu kodierenden Rahmen zeitlich auf die zu kodierenden Rahmen folgen; und
(b) eine Kodiereinrichtung (3, 4, 5, 6), die den Rahmen, der einen Nachbildeffekt aufweist, anstatt des zu kodierenden Rahmens kodiert.

**2.** Vorrichtung nach Anspruch 1, weiter umfassend:

(c) einen Speicher (200, 201, 202), der darin einen nicht zu kodierenden Rahmen speichert; und
(d) einen Verwalter (203), der überwacht, ob der Speicher (200, 201, 2002) darin einen nicht zu kodierenden Rahmen speichert.

**3.** Vorrichtung nach Anspruch 1 oder 2, wobei der Rahmenerzeuger (100, 100A) Koeffizienten, die in Übereinstimmung mit Differenzen in Bildpunkten zwischen den nicht zu kodierenden Rahmen und dem zu kodierenden Rahmen bestimmt werden, mit den nicht zu kodierenden Rahmen und dem zu kodierenden Rahmen Bildpunkt für Bildpunkt multipliziert, und die nicht zu kodierenden Rahmen und die zu kodierenden Rahmen zueinander addiert.

**4.** Vorrichtung nach Anspruch 1, wobei der Rahmenerzeuger (100) Folgendes umfasst:

(a) Erste bis N-te Speicher (200, 201, 202), wobei jeder darin einen nicht zu kodierenden Rahmen speichert, wobei N eine ganze Zahl gleich oder größer als zwei ist;
(b) einen Verwalter (203), der überwacht, ob jeder der ersten bis N-ten Speicher (200, 201, 202) darin einen nicht zu kodierenden Rahmen speichert;
(c) einen Schalter (205), der einen der ersten bis N-ten Speicher (200, 201, 202) auswählt, um darin einen nicht zu kodierenden Rahmen in Übereinstimmung mit Befehlen, die von dem Administrator (203) empfangen werden, zu speichern;
(d) erste bis N-te Multiplizierer (206, 207, 208), die mit den jeweils ersten bis N-ten Speichern (200, 201, 202) verbunden sind, wobei die ersten bis N-ten Multiplizierer (206, 207, 208) einen Koeffizienten, der in Übereinstimmung mit der Anzahl der nicht zu kodierenden Rahmen bestimmt wird, mit einem nicht zu kodierenden Rahmen multiplizieren, der in den ersten bis N-ten Speichern (200, 201, 202) gespeichert ist;
(e) einen Multiplizierer (206, 207, 208), der einen Koeffizienten, der in Übereinstimmung mit der Anzahl von nicht zu kodierenden Rahmen bestimmt wird, mit einem zu kodierenden Rahmen multipliziert; und
(f) einen Addierer (210), der den nicht zu kodierenden Rahmen, nachdem dieser mit dem Koeffizienten multipliziert wurde, zu dem zu kodierenden Rahmen, nachdem dieser mit dem Koeffizienten multipliziert wurde, addiert.

**5.** Vorrichtung nach Anspruch 4, wobei der Rahmenerzeuger (100A) weiter Folgendes umfasst:

(g) ein Differenzrechenwerk (302), das die Differenz der Bildpunkte zwischen den nicht zu kodierenden Rahmen und dem zu kodierenden Rahmen berechnet; und
(h) ein Koeffizientenrechenwerk (301), das einen Koeffizienten in Übereinstimmung mit der von dem Differenzrechenwerk (302) berechneten Differenz berechnet, und den auf diese Weise berechneten Koeffizienten an jede der ersten bis N-ten Multiplizierer (206, 207, 208) überträgt.

**6.** Verfahren zum Kodieren dynamischer Bilder, umfassend:

(a) Bestimmen, ob ein Eingaberahmen kodiert werden soll oder nicht in Übereinstimmung damit, ob die Datenbelegung in einem Puffer (7) kleiner als, gleich oder größer als ein Schwellwert ist.
(b) Kombinieren einer Mehrzahl von nicht zu kodierenden Rahmen zu einem zu kodierenden Rahmen zum Bilden eines Rahmens, der einen Nachbildeffekt aufweist durch
(c) Multiplizieren von Koeffizienten, die in Übereinstimmung mit einer Anzahl von nicht zu kodierenden Rahmen bestimmt werden, mit den nicht zu kodierenden Rahmen und dem zu kodierenden Rahmen; und
(d) Addieren der nicht zu kodierenden Rahmen und des zu kodierenden Rahmens zu einander, wobei die nicht zu kodierenden Rahmen zu dem zu kodierenden Rahmen zeitlich aufeinanderfolgen; und
(e) Kodieren des Rahmens, der einen Nachbildeffekt aufweist, an Stelle des zu kodierenden Rahmens.

**7.** Verfahren nach Anspruch 6, weiter umfassend:

(f) Speichern eines nicht zu kodierenden Rahmens in einem Speicher; und
(g) Überwachen, ob der Speicher darin einen nicht zu kodierenden Rahmen speichert.

**8.** Verfahren nach Anspruch 6 oder 7, weiter umfassend:

(h) Multiplizieren der Koeffizienten, die in Übereinstimmung mit Differenzen in Bildpunkten zwischen den nicht zu kodierenden Rahmen und dem zu kodierenden Rahmen bestimmt werden, mit den nicht zu kodierenden Rahmen und dem zu kodierenden Rahmen Bildpunkt für Bildpunkt; und
(i) Addieren der nicht zu kodierenden Rahmen und der zu kodierenden Rahmen zu einander.

9. Programm, das einen Computer veranlasst ein Verfahren zum Kodieren dynamischer Bilder durchzuführen, wobei von dem Computer ausgeführte Schritte in Übereinstimmung mit dem Programm umfassen:

(a) dass bestimmt wird, ob ein Eingaberahmen kodiert werden soll oder nicht in Übereinstimmung damit, ob die Datenbelegung in einem Puffer (7) kleiner als, gleich oder größer als ein Schwellwert ist;
(b) dass ein Rahmenerzeuger, eine Mehrzahl von nicht zu kodierenden Rahmen zu einem zu kodierenden Rahmen zum Bilden eines Rahmens, der einen Nachbildeffekt aufweist, kombiniert, durch
(c) Multiplizieren von Koeffizienten, die in Übereinstimmung mit der Anzahl der nicht zu kodierenden Rahmen bestimmt werden, mit den nicht zu kodierenden Rahmen und dem zu kodierenden Rahmen; und
(d) Addieren der nicht zu kodierenden Rahmen und des zu kodierenden Rahmen zu einander, wobei die nicht zu kodierenden Rahmen zeitlich auf den zu kodierenden Rahmen folgen; und
(e) Kodieren des Rahmens, der einen Nachbildeffekt aufweist, an Stelle des zu kodierenden Rahmens.

10. Programm nach Anspruch 9, wobei die Schritte weiter umfassen:

(f) Speichern eines nicht zu kodierenden Rahmens in einen Speicher; und
(g) Überwachen, ob der Speicher darin einen nicht zu kodierenden Rahmen speichert.

11. Programm nach Anspruch 9 oder 10, wobei die Schritte weiter umfassen:

(h) Multiplizieren der Koeffizienten, die in Übereinstimmung mit der Differenz in den Bildpunkten zwischen dem nicht zu kodierenden Rahmen und dem zu kodierenden Rahmen bestimmt werden, mit den nicht zu kodierenden Rahmen und den zu kodierenden Rahmen Bildpunkt für Bildpunkt; und
(i) Addieren der nicht zu kodierenden Rahmen und der zu kodierenden Rahmen zu einander.

## Revendications

1. Appareil de codage d'images dynamiques qui détermine si une trame d'entrée doit être codée ou pas selon que l'occupation de données dans un tampon (7) est inférieure, égale ou supérieure à un seuil,
**caractérisé par**

(a) un producteur de trames (100, 100A) combinant une pluralité de trames à ne pas coder en une trame à coder pour former une trame ayant un effet d'après-image, dans lequel le producteur de trames (100, 100A) multiplie des coefficients déterminés en fonction d'un nombre de trames à ne pas coder, par les trames à ne pas coder et la trame à coder, et ajoute les trames à ne pas coder et la trame à coder l'une à l'autre, les trames à ne pas coder étant temporellement successives à la trame à coder ; et
(b) un codeur (3, 4, 5, 6) codant la trame ayant un effet d'après-image à la place de la trame à coder.

2. Appareil selon la revendication 1, comprenant en outre :

(c) une mémoire (200, 201, 202) dans laquelle est mémorisée une trame à ne pas coder ; et
(d) un administrateur (203) surveillant si la mémoire (200, 201, 202) mémorise à l'intérieur de celle-ci une trame à ne pas coder.

3. Appareil selon la revendication 1 ou 2, dans lequel le producteur de trames (100, 100A) multiplie des coefficients déterminés en fonction des différences de pixels entre les trames à ne pas coder et la trame à coder, par les trames à ne pas coder et la trame à coder pixel par pixel, et ajoute les trames à ne pas coder et les trames à coder l'une à l'autre.

4. Appareil selon la revendication 1, dans lequel le producteur de trames (100) comprend :

(a) des première à N-ème mémoires (200, 201, 202) dans chacune desquelles est mémorisée une trame à ne pas coder, dans lequel N est un nombre entier supérieur ou égal à deux ;

(b) un administrateur (203) surveillant si chacune des première à N-ème mémoires (200, 201, 202) mémorise dans celle-ci une trame à ne pas coder ;

(c) un commutateur (205) sélectionnant l'une des première à N-ème mémoires (200, 201, 202) pour mémoriser à l'intérieur de celle-ci une trame à ne pas coder, selon une instruction reçue de l'administrateur (203) ;

(d) des premier à N-ème multiplicateurs (206, 207, 208) associés respectivement aux première à N-ème mémoires (200, 201, 202), les premiers à N-ème multiplicateurs (206, 207, 208) multipliant un coefficient déterminé en fonction du nombre de trames à ne pas coder, par une trame à ne pas coder, mémorisées dans les première à N-ème mémoires (200, 201, 202) ;

(e) un multiplicateur (206, 207, 208) multipliant un coefficient déterminé en fonction du nombre de trames à ne pas coder, par une trame à coder ; et

(f) un additionneur (210) ajoutant la trame à ne pas coder ayant été multipliée par le coefficient, à la trame à coder ayant été multipliée par le coefficient, l'une à l'autre.

5. Appareil selon la revendication 4, dans lequel le producteur de trames (100A) comprend en outre :

(g) un calculateur de différence (302) calculant la différence en pixels entre les trames à ne pas coder et la trame à coder ; et

(h) un calculateur de coefficient (301) calculant un coefficient en fonction de la différence calculée par le calculateur de différence (302), et transmettant le coefficient ainsi calculé à chacun des premier à N-ème multiplicateurs (206, 207, 208).

6. Procédé de codage d'images dynamiques, comprenant les étapes consistant à :

(a) déterminer si une trame d'entrée doit être codée ou pas selon que l'occupation de données dans un tampon (7) est inférieure, égale ou supérieure à un seuil,

(b) combiner une pluralité de trames à ne pas coder en une trame à coder pour former une trame ayant un effet d'après-image par l'étape consistant à

(c) multiplier des coefficients déterminés en fonction d'un nombre de trames à ne pas coder, par les trames à ne pas coder et la trame à coder ; et

(d) ajouter les trames à ne pas coder et la trame à coder l'une à l'autre, les trames à ne pas coder étant temporellement successives à la trame à coder ; et

(e) coder la trame ayant un effet d'après-image à la place de la trame à coder.

7. Procédé selon la revendication 6, comprenant en outre les étapes consistant à :

(f) mémoriser une trame à ne pas coder dans une mémoire ; et

(g) surveiller si la mémoire mémorise à l'intérieur de celle-ci une trame à ne pas coder.

8. Procédé selon la revendication 6 ou 7, comprenant en outre les étapes consistant à :

(h) multiplier des coefficients déterminés en fonction des différences de pixels entre les trames à ne pas coder et la trame à coder, par les trames à ne pas coder et la trame à coder pixel par pixel, et

(i) ajouter les trames à ne pas coder et les trames à coder l'une à l'autre.

9. Programme pour amener un ordinateur à effectuer un procédé de codage d'images dynamiques, les étapes exécutées par l'ordinateur en fonction du programme comprenant :

(a) déterminer si une trame d'entrée doit être codée ou pas selon que l'occupation de données dans un tampon (7) est inférieure, égale ou supérieure à un seuil,

(b) combiner par un producteur de trames une pluralité de trames à ne pas coder en une trame à coder pour former une trame ayant un effet d'après-image par l'étape consistant à

(c) multiplier des coefficients déterminés en fonction du nombre de trames à ne pas coder, par les trames à ne pas coder et la trame à coder ; et

(d) ajouter les trames à ne pas coder et la trame à coder l'une à l'autre, les trames à ne pas coder étant temporellement successives à la trame à coder ; et

(e) coder la trame ayant un effet d'après-image à la place de la trame à coder.

10. Programme selon la revendication 9, dans lequel les étapes comprennent en outre :

(f) mémoriser une trame à ne pas coder dans une mémoire ; et
(g) surveiller si la mémoire mémorise à l'intérieur de celle-ci une trame à ne pas coder.

**11.** Programme selon la revendication 9 ou 10, dans lequel les étapes comprennent en outre :

(h) multiplier des coefficients déterminés en fonction des différences de pixels entre les trames à ne pas coder et la trame à coder, par les trames à ne pas coder et la trame à coder pixel par pixel, et
(i) ajouter les trames à ne pas coder et les trames à coder l'une à l'autre.

# FIG.1
## PRIOR ART

# FIG.2

# FIG.3

# FIG.4

| CONNECTING FRAME MEMORY TO ONE OF FIRST TO THIRD FRAME MEMORIES | S101 |

| STORING SKIPPED FRAME IN SELECTED FRAME MEMORY | S102 |

# FIG.5

CONNECTING FRAME MEMORY TO FIRST FRAME MEMORY ⟿ S201

CONNECTING FIRST FRAME MEMORY TO FIRST MULTIPLIER ⟿ S202

FRAME DATA × k0 ⟿ S203

SKIPPED-FRAME DATA × k1 ⟿ S204

( FRAME DATA × k0 )
+
( SKIPPED-FRAME DATA ) × k1 ⟿ S205

STORING IN AI FRAME MEMORY ⟿ S206

# FIG.6

TO BLOCKING SECTION 3

FROM CONTROLLER 17

100A

FROM FRAME MEMORY 2

# FIG.7

| | |
|---|---|
| CONNECTING FIRST FRAME MEMORY TO DIFFERENCE CALCULATOR | S301 |
| CALCULATING DIFFERENCE | S302 |
| CALCULATING COEFFICIENT | S303 |
| DATA × COEFFICIENT | S304 |
| Σ(DATA × COEFFICIENT) | S305 |
| STORING IN AI FRAME MEMORY | S306 |

# FIG.8A

INPUT FRAMES

| 1 | 2 | 3 | 4 |

SKIPPED   SKIPPED

# FIG.8B

ENCODED FRAMES (CONVENTIONAL)

| 1 | 4 |

# FIG.8C

ENCODED FRAMES (INVENTION)

| 1 | 2+3+4 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10112852 A